# EUROPEAN PATENT SPECIFICATION

(11) **EP 1 717 134 B1**
(45) Date of publication and mention of the grant of the patent: **06.05.2009**
(21) Application number: 06251704.0
(22) Date of filing: 29.03.2006
(51) Int. Cl.: B62D 53/08

(54) **Fifth wheel safety arrangement**
Sicherheitsvorrichtung einer Sattelkupplung
Dispositif de sécurité pour une sellette d'attelage

(30) Priority: 26.04.2005 GB 0508405
(43) Date of publication of application: 02.11.2006
(73) Proprietor: Fontaine International Europe Limited, Lowton, Warrington WA3 2AG (GB)
(72) Inventor: Hayes, Anthony, Cheshire WA7 4YT (GB)
(74) Representative: Barker, Rosemary Anne

(56) References cited:
- JP-A- 2002 331 971
- JP-A- 2003 089 365
- US-A- 4 649 369
- US-A- 5 344 173

## Description

This invention concerns a fifth wheel safety arrangement for a towing vehicle having an electrical management system whereby, in use, the speed of the vehicle may be limited.

At present a mechanism, commonly known as a fifth wheel, whereby a trailer having a dependent kingpin is attachable to a vehicle, is usually pivotably mounted upon a slider carriage, which in turn is slidably adjustable upon a slider frame between a plurality of positions from front to rear in the direction of travel of the vehicle. The slider frame comprises spaced apart guide rails and cross-pieces extending between these. The slider carriage is held in place at any one of the plural adjustment positions by a spring loaded mechanism including plungers which are urged into engagement with respective notches in the respective rails. Such notches define limiting front and rear positions as well as a plurality of intervening positions between front and rear. The spring loaded mechanism is releasable to allow displacement of the carriage to any selected position - front, rear or in between.

Such adjustment of the position of the fifth wheel is necessary so that the driver can adjust the gap between the front of the trailer and the rear of a cab of the towing vehicle in order to keep within legal limits for maximum overall length of vehicle and also in order to balance the weight carried by the various axles of the towing vehicle and the trailer and again keep within legal limits. The tendency, of course, is for the gap to be as narrow as possible.

When the trailer is refrigerated, the refrigeration unit is commonly mounted in this gap.

When the fifth wheel is in its rearmost position on the slider there should be enough room for a driver to enter the gap in order to connect or disconnect pneumatic, hydraulic and electrical connecting cables between the tractor and the trailer. However, there is a risk that drivers may disregard safety requirements and either disconnect the trailer from the fifth wheel coupling so that the kingpin which hangs down from the trailer is no longer locked into the fifth wheel and then move the tractor forward or else fail to connect the kingpin to the fifth wheel and, in either case, the trailer front end merely rests upon the fifth wheel housing while the cable disconnection or re-connection is attended to. This can be especially dangerous when a driver is re-connecting the pneumatic or hydraulic cables as this releases the brake on the trailer, which could then start to move. Indeed, there have been fatalities. Although the trailer in this position, when it is being disconnected from or re-connected to a truck, will be mounted upon support legs, these legs are only efficient in vertical load bearing, so they would not efficiently prevent the trailer moving if it is on a slope.

An object of the invention is to reduce the temptation for drivers to indulge in such risky behaviour as just described.

JP 2003 089365 discloses a safety arrangement for a towing vehicle which has a slider frame, a fifth wheel mounted upon a slider carriage which is slidably displaceable upon the frame between predetermined front and rear positions, relative to intended direction of vehicle travel, and sensor means operative to detect when the fifth wheel is in its rear position. The sensor means is connected to the electrical management system of the vehicle so as to apply the brakes of the vehicle and also generate an alarm whenever the fifth wheel is in its rear position.

In contrast, the present invention proposed a safety arrangement as specified in claim 1.

Many such towing vehicles have a power take off unit connected to the electrical management system whereby power may be provided to operate systems of an attached trailer. Engagement of the power take off restricts the vehicle's engine speed, and thus restricts the speed at which the vehicle can be driven.

When the slider carriage and fifth wheel are in the rear position the combination of towing vehicle and trailer will inevitably be over the legal limit. A restriction in speed brought about by the electrical management system, triggered by the sensor, either with or without the involvement of such a power take off unit, will warn the driver of the towing vehicle of this fact. It will prevent effective travel on a highway, but will still allow the driver to manoeuvre the vehicle combination around a service yard while the fifth wheel is in its rear position.

The invention will be described further, by way of example, with reference to the accompanying drawings, in which:
Fig. 1 is a perspective view of a fifth wheel safety arrangement in accordance with the present invention with the fifth wheel depicted in its front position and the fifth wheel release arm omitted for clarity;
Fig. 2 is a similar view with the fifth wheel depicted in its rear position and the release arm shown schematically in broken lines;
Fig. 3 is a reduced scale, partial schematic side view of a towing vehicle and trailer to which the safety arrangement of the invention is applied, the fifth wheel being depicted in its front position;
Fig. 4 is a view similar to Fig. 3 with the fifth wheel depicted in its rear position;
Fig. 5 is a larger scale fragmentry side view showing the fifth wheel mounted on the towing vehicle and in its front position, as in Fig. 1; and
Fig. 6 is a block diagram showing how the sensor of the inventive safety arrangement is connected to a towing vehicle's electrical system.

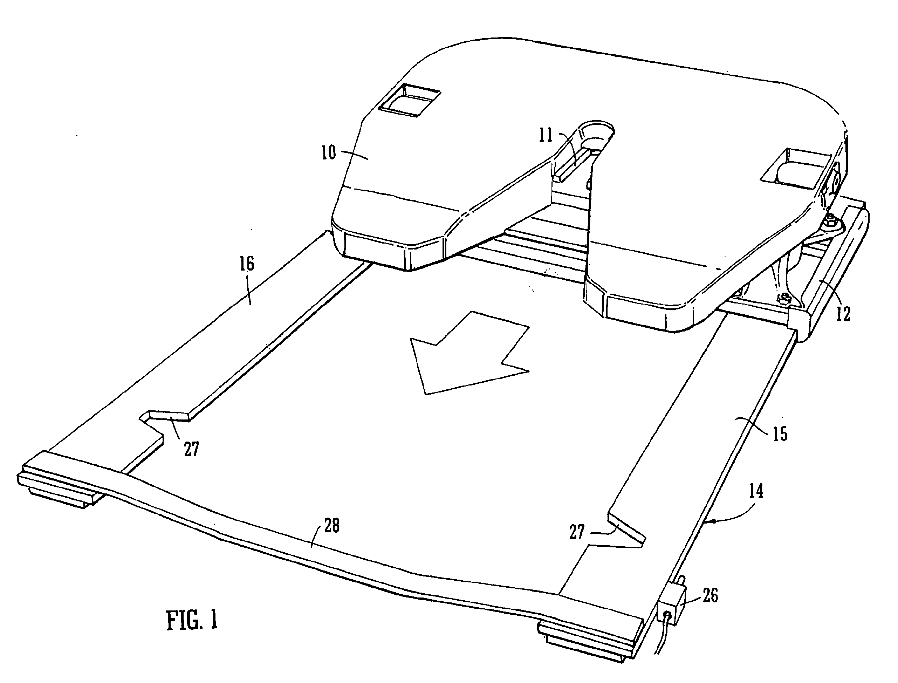

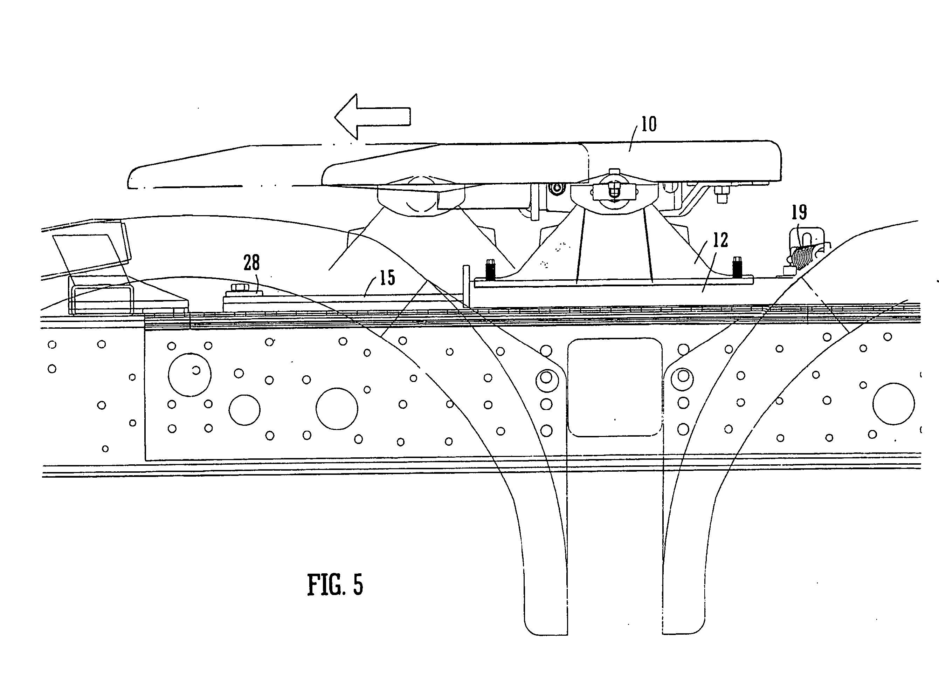

With reference to Figs. 1, 2 and 5 the safety arrangement of the invention includes a fifth wheel 10 mounted upon a slider carriage, designated generally by reference numeral 12, which carriage 12 is slidably displaceable on a slider frame 14. Such an arrangement is already known. The slider frame 14 comprises spaced apart guide rails 15, 16 and front and rear cross pieces 18, 28 extending therebetween. Facing edges of the guide rails 15, 16 are provided with respective aligned notches 17, 27 in the vicinity of the front and rear cross-pieces 18, 28. These aligned pairs of notches 17, 27 define front and rear positions of the fifth wheel 10 and carriage 12. The carriage 12 has a spring loaded engagement mechanism of conventional type including pivotably mounted plungers (not shown) which are normally urged into engagement with one or the other pairs of notches 17, 27 so as to retain the fifth wheel in either its front or its rear position. One spring 19 of the mechanism is visible in Fig. 5.

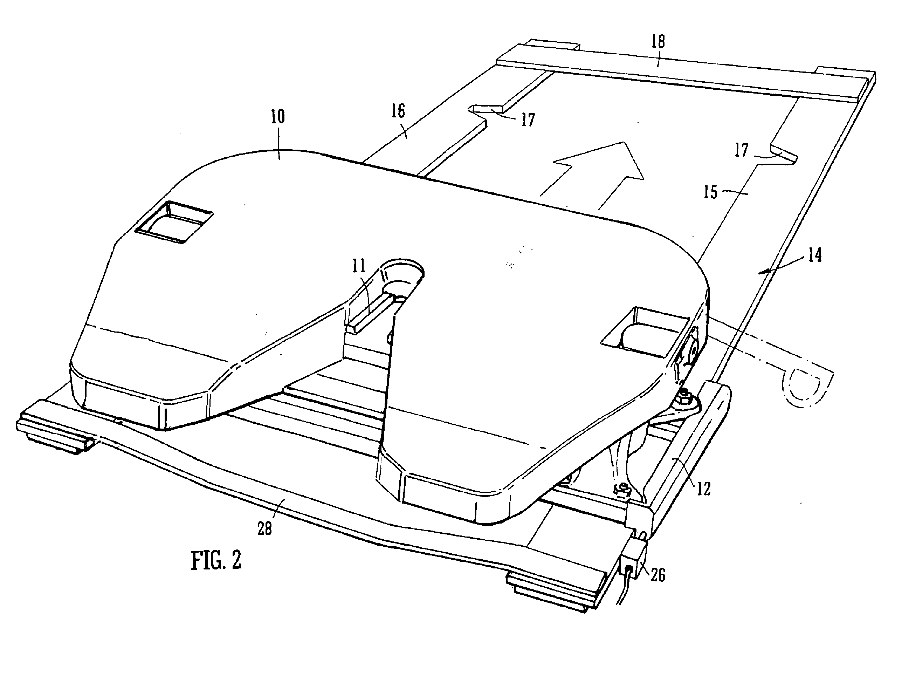

The plungers may be released, against spring bias, to allow the carriage 12 to move the fifth wheel 10 from the front to the rear position or vice versa. This may be done manually, by way of a lever mechanism or more likely it will be done by means of an air cylinder, operable from a cab of a tractor vehicle on which the slider frame 14 is mounted. Both such mechanisms are well known so the details of same, which are obscured beneath the fifth wheel in the Fig. 1 and 2 illustrations are not relevant to the present invention.

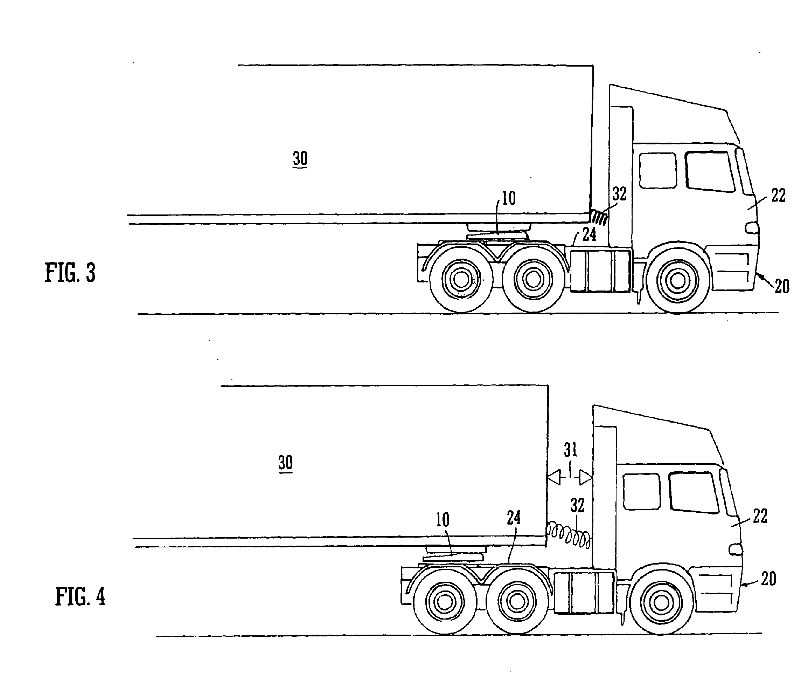

In use, the slider frame 14 and the carriage 12, and the fifth wheel 10 mounted thereon, are mounted onto the platform 24 behind the cab 22 of the towing tractor vehicle 20, as indicated in Figs. 3 and 4. A trailer 30 is connected to the vehicle 20 by a kingpin (not shown) depending from the front of the trailer 30 engaging into the rearwardly directed slot 11 of the fifth wheel 10 in a manner well known in this technical field. The carriage engagement mechanism can be released and the towing vehicle 20 can be driven very slowly forwards (to move from the position shown in Fig. 3 to the position shown in Fig. 4) or in reverse (to move from the Fig. 4 to the Fig. 3 position) to move the fifth wheel 10 between its front and rear positions as defined by the notches 17, 27 or vice versa. The carriage engagement mechanism would then be caused to re-engage in the new position.

Such adjustment of the fifth wheel position is possible when the trailer 30 is laden, or unladen, although the latter is preferable.

Known slider frames include a plurality of notches in each rail 15, 16 defining a large number of possible positions in a fore-aft direction for the carriage 12 and the fifth wheel 10 mounted thereon. That is also possible in the safety arrangement of the invention. However, in preferred embodiments of the arrangement of the invention only two positions are provided, namely a single front position and a single rear position, as defined by respective pairs of notches 17, 28, shown in Figs. 1 and 2. This simplifies the arrangement and enables stop means to be provided which ensure that the engagement mechanism will be aligned reliably with either the front or rear sets of notches 17, 28 respectively.

A sensor 26, which may be a proximity switch, a reed switch, or any other suitable type of switch is mounted on frame 14 to detect when the fifth wheel 10 and/or the carriage 12 on which it is mounted is in its rear position. In other embodiments such a sensor 26 may be mounted elsewhere on the frame 14 or elsewhere on the vehicle 20 in the vicinity of the frame 14.

When the fifth wheel 10 is in its rear position, as indicated in Fig. 4 the gap 31 between the vehicle 20 and the trailer 30 is at its maximum and this should be sufficient to allow access for connection or disconnection of cables 32. However, in this position the overall length of vehicle and trailer 20, 30 will exceed the legal limit.

The sensor 26 may connect to a visual indicator in the vehicle cab 22, but that could be disregarded or not noticed by the driver.

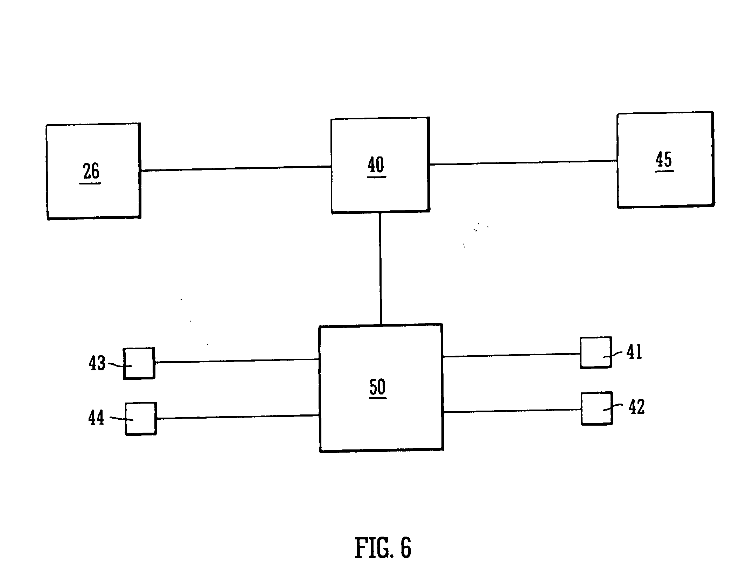

The sensor 26 is connected to the electrical management system of the vehicle 20, which system includes a control unit 40 and a power take off 50 as shown in Fig. 6. When the sensor 26 detects the presence of the fifth wheel 10 in its rear position (Figs. 2 and 4) the control unit 40 is triggered to engage the power take off 50, which provides power to electrical, pneumatic and hydraulic actuators 41, 42 of the towing vehicle 20 and 43, 44 of the trailer 30. The electrical system also includes the vehicle engine 45 and engagement of the power take off 50 restricts engine speed so that the vehicle 20 can only travel at about 16.1 km/h (10mph). Therefore, when the fifth wheel 10 is detected as being in its rear position (Figs. 2 and 4) the vehicle is automatically restricted in its speed and this alone will ensure that a driver is aware of the fifth wheel position, and prevent inadvertent driving off with too large a gap 31 and an illegal overall length for the vehicle and trailer 20, 30.

The simplicity of the system with only a single front and single rear position, the ease of engagement in either of these positions, and the ready awareness by the driver as to which position the fifth wheel 10 is in, should all encourage good practice by drivers so they will not be tempted to enter the gap 31 while the trailer 30 is disconnected from the fifth wheel 10.

The foregoing description and drawings are illustrative and not limitative of the scope of the invention. Many variations in detail are possible and, in particular, it is not essential that speed restriction of the vehicle should be mediated by a power take off unit. It could be achieved in a different manner by the electrical management system of the tractor vehicle, irrespective of whether or not a power take-off is provided.

## Claims

1. A fifth wheel safety arrangement for a towing vehicle (20) having an electrical management system, said safety arrangement comprising a slider frame (14), a fifth wheel (10) mounted upon a slider carriage (12) which is slidably displaceable upon the frame (14) between predetermined front and rear positions, relative to intended direction of vehicle travel, and sensor means (26) operative to detect when the fifth wheel (10) is in its rear position, said sensor means (26) being connectable to the electrical management system of the vehicle (20) so as to affect the speed of the vehicle whenever the fifth wheel is in its rear position, **characterised in that** the electrical management system is triggered by the sensor means to restrict engine speed so that the speed at which the vehicle can be driven is limited when the fifth wheel is in its rear position.

2. A towing vehicle having an electrical management system whereby, in use, the engine speed may be limited, and incorporating a fifth wheel safety arrangement as claimed in claim 1.

3. A towing vehicle according to claim 2 further including a power take off unit which is connected to the electrical management system and is engagable by said system to restrict engine speed when the fifth wheel is in its rear position.

## Patentansprüche

1. Sattelkupplungssicherheitseinrichtung für ein Zugfahrzeug (20), das ein elektrisches Leitsystem aufweist, wobei die Sicherheitseinrichtung einen Gleitrahmen (14), eine Sattelkupplung (10), die auf einem Gleitfahrwerk (12) montiert ist, das auf dem Rahmen (14) zwischen einer vorbestimmten Vorderposition und einer vorbestimmten Rückposition relativ zu der beabsichtigten Richtung der Fahrzeugbewegung gleitend verlagerbar ist, und Sensormittel (26) aufweist, die funktionsfähig sind, zu detektieren, wenn sich die Sattelkupplung (10) in ihrer Rückposition befindet, wobei die Sensormittel (26) mit dem elektrischen Leitsystem des Fahrzeugs (20) verschaltbar sind, um die Geschwindigkeit des Fahrzeugs zu beeinflussen, immer wenn sich die Sattelkupplung in ihrer Rückposition befindet, **dadurch gekennzeichnet, dass** das elektrische Leitsystem durch die Sensormittel angesteuert wird, um die Motorgeschwindigkeit zu drosseln, sodass die Geschwindigkeit, bei der das Fahrzeug gefahren werden kann, begrenzt ist, wenn sich die Sattelkupplung in ihrer Rückposition befindet.

2. Zugfahrzeug mit einem elektrischen Leitsystem, durch das im Betrieb die Motorgeschwindigkeit begrenzt werden kann, und enthaltend eine Sattelkupplungssicherheitseinrichtung nach Anspruch 1.

3. Zugfahrzeug nach Anspruch 2, das ferner eine Stromabschalteinheit aufweist, die mit dem elektrischen Leitsystem verschaltbar ist und durch das System anstellbar ist, um die Motorgeschwindigkeit zu drosseln, wenn sich die Sattelkupplung in ihrer Rückposition befindet.

## Revendications

1. Agencement de sécurité de sellette d'attelage pour un véhicule tracteur (20) comportant un système de gestion électrique, ledit agencement de sécurité comprenant un cadre de dispositif de coulissement (14), une sellette d'attelage (10) montée sur un chariot de dispositif de coulissement (12) qui peut être déplacé de manière coulissante sur le cadre (14) entre des positions avant et arrière prédéterminées, par rapport à une direction attendue de déplacement du véhicule, et des moyens formant capteur (26) pouvant être utilisés pour détecter si la sellette d'attelage (10) est à sa position arrière, lesdits moyens formant capteur (26) pouvant être connectés au système de gestion électrique du véhicule (20) de manière à affecter la vitesse du véhicule à chaque fois que la sellette d'attelage est à sa position arrière, **caractérisé en ce que** le système de gestion électrique est déclenché par les moyens formant capteur pour limiter la vitesse du moteur de sorte que la vitesse à laquelle le véhicule peut être entraîné soit limitée lorsque la sellette d'attelage est à sa position arrière.

2. Véhicule tracteur comportant un système de gestion électrique par lequel, en utilisation, la vitesse du moteur peut être limitée, et incorporant un agencement de sécurité de sellette d'attelage selon la revendication 1.

3. Véhicule tracteur selon la revendication 2, comprenant en outre une unité de coupure de puissance qui est connectée au système de gestion électrique et qui peut être engagée par ledit système pour limiter la vitesse du moteur lorsque la sellette d'attelage est à sa position arrière.
